# EUROPEAN PATENT SPECIFICATION

(11) **EP 3 468 206 B1**
(45) Date of publication and mention of the grant of the patent: **24.02.2021**
(21) Application number: 17194902.7
(22) Date of filing: 05.10.2017
(51) Int. Cl.: H04L 29/08, H04N 21/41, H04N 21/422, H04N 21/466, H04L 29/06, H04N 17/00, G08C 17/00

(54) **A SYSTEM AND METHOD FOR MONITORING A QUALITY OF INTERACTION BETWEEN AT LEAST ONE USER AND A RECEPTION DEVICE**
SYSTEM UND VERFAHREN ZUR ÜBERWACHUNG DER QUALITÄT VON WECHSELWIRKUNGEN ZWISCHEN MINDESTENS EINEM BENUTZER UND EINER EMPFANGSVORRICHTUNG
SYSTÈME ET PROCÉDÉ DE SURVEILLANCE D'UNE QUALITÉ D'INTERACTION ENTRE AU MOINS UN UTILISATEUR ET UN DISPOSITIF DE RÉCEPTION

(43) Date of publication of application: 10.04.2019
(73) Proprietor: SmarDTV S.A., 1033 Cheseaux-sur-Lausanne (CH)
(72) Inventor: SERVIGNAT, David, 13600 Ceyreste (FR)
(74) Representative: Ipside

(56) References cited:
- US-A1- 2009 002 219
- US-A1- 2011 107 159
- US-A1- 2016 066 002
- US-A1- 2016 225 252

## Description

### TECHNICAL DOMAIN

The present disclosure generally relates to the domain of devices for receiving digital media content. More particularly, embodiments described herein allow for quality of service perceived by a user of such a reception device to be monitored.

### BACKGROUND

PayTV operators have an interest in knowing the quality of service experienced by their customers who use a reception device to receive content provided to them. Quality of service may be affected by, for example: the number of service interruptions which occur at a receiver at a customer's premises and/or how frequently such interruptions occur. Interruptions may manifest themselves as an STB freeze or hang or a black screen being shown on a viewing device connected to the reception device or jitter or buffering during content playback for example. An STB is a particular example of a reception device as described herein.

Known techniques for allowing a PayTV operator to gain feedback on the quality of service QoS at a customer's premises include those in which a dedicated piece of equipment is installed at the customer's premises to monitor the QoS. However, this usually cannot be generally done for all customers and so only a partial view of what happens in the field may be available. Furthermore, depending on the type of equipment deployed, it may not be possible to monitor all events which could affect the QoS.

As well as placing monitoring equipment at customers' or users' premises, such monitoring equipment may alternatively or additionally be placed at various other points in a network for the distribution of content. The monitoring equipment is configured to evaluate the quality of a video stream being distributed by measuring one or more QoS metrics. By tapping into the network in this way, the various monitoring equipment can be configured to send their QoS measurement results to a server for analysis, thereby giving an idea of the Quality of Service of a network.

Known QoS measurement techniques are generally addressed at automating the QoS measurements so that they can be performed without user intervention. Dynamic QoS control can also be achieved using characteristics of a user's local environment as feedback. For example, if a user is not actually watching a particular broadcast, then it may be beneficial to let that user's QoS fade so that available network resources may be employed to provide improved QoS to another user who needs it. A particular user's display equipment being switched off for example would be a useful environment variable in such systems for providing the feedback to automatically control the Quality of Service at the particular user's premises.

Adaptive streaming methods use automated techniques for estimating or measuring an available bandwidth at a particular user's premises in order to be able to provide a representation of the requested content at a bit-rate which is compatible with the available bandwidth. These techniques can therefore be said to be known quality of service measurement techniques.

Patent document US 2016/225252 A1 discloses a method for adaptively configuring a remote control including analyzing a log of events, maintained by the remote control, which indicate how the remote control and the devices it controls are used by a user. Patent document US 2011/107159 A1 discloses methods for detecting remote control errors in controlled devices. More particularly, a remote control detects an error condition during operation and transmits information regarding the error to a controlled device. Patent document US 2009/002219 A1 discloses a method for storing and using information received from a controllable appliance in a controlling device.

### BRIEF DESCRIPTION OF THE DRAWINGS

The embodiments disclosed herein will be better understood thanks to the detailed description which follows and the accompanying drawing, which is given as a nonlimiting example, wherein:

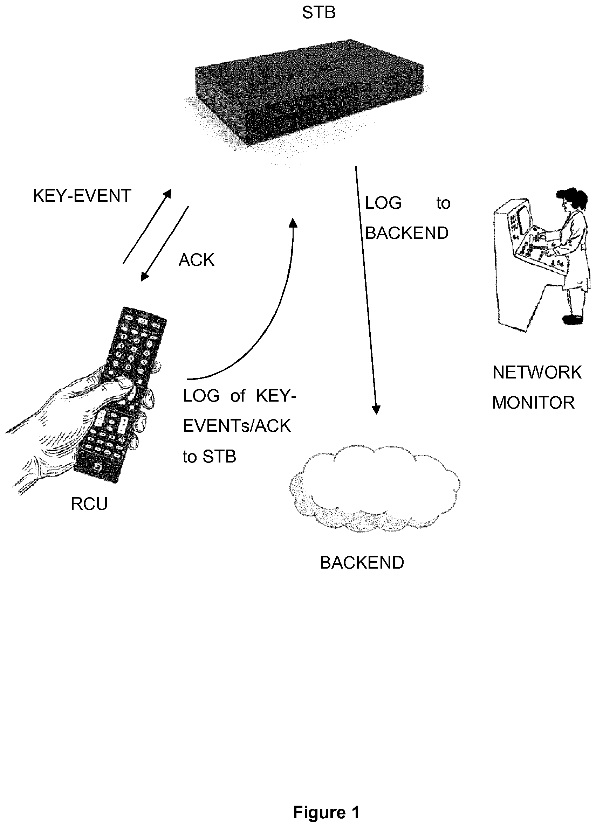

- figure 1, shows a system comprising a media reception device in which an embodiment disclosed herein may be deployed

### SUMMARY

The scope of the invention is defined by the appended independent claims 1, 7, and 8. Further embodiments are defined in their respective dependent claims.

### DETAILED DESCRIPTION

The present disclosure relates to the use a media content receiver's remote control unit, the remote control unit having bidirectional communication capabilities with the receiver, as a convenient Quality of Service **QoS** monitoring device. Various different embodiments are proposed for allowing the remote control unit to record the user's reactions or attempts to control the receiver while viewing content received by the receiver and for the recorded actions of a plurality of users to be analysed by an operator in order to get an idea of the perceived Quality of Service being provided by the receivers deployed in the field.

Remote control units **RCU** are known in the art for allowing a user to issue commands to an electronic device. The RCU is always remote from the device to be controlled, providing the advantage that the user need not physically interact with the device to be controlled, but instead uses the RCU to send the commands, usually wirelessly, to the device to be controlled while the device is at a distance from the RCU and the user. Embodiments disclosed herein may use a variation of the known RCU as long as the RCU is of a type which is configured to not only send commands remotely to the device to be controlled, but also to receive information in return from the device being controlled. Such RCUs are known as a bidirectional RCUs. Preferably the RCU is further configured to store at least part of the information received in return from the device being controlled.

According to an aspect, there is disclosed a system for monitoring a quality of interaction between at least one user and a reception device. Monitoring such a characteristic allows for the perceived quality of service to be deduced. To this end, in a network for distributing media content, there is disclosed a system for monitoring a quality of interaction between at least one user and a reception device for receiving the content for the user, the system comprising the reception device and a controller device for controlling the presentation of the content on a presentation device corresponding to the reception device, the controller device and the reception device being connected via a bidirectional, preferably wireless or otherwise remote, communication channel for sending at least one control command from the controller device to the reception device and for receiving, by the controller device, at least a corresponding acknowledgment of reception of the command from the reception device; wherein, the reception device is configured to send at least the acknowledgment of reception to the controller device via the bidirectional communication channel for each command received; and
the controller device is configured to log the control command and its corresponding acknowledgment receipt, and is further configured to return at least one log to the reception device for uploading to an operator for analysis of the quality of interaction.

According to another aspect, there is disclosed, a remote control device for bidirectional remote communication with a reception device, the remote control device for sending at least one control command to the reception device and for receiving at least a corresponding acknowledgment of reception of the command from the reception device, the remote control device being configured to log the control command and its corresponding acknowledgment receipt and to return at least one log to the reception device for uploading to an operator for analysis of a quality of interaction.

According to yet another aspect, disclosure is made of a reception device for receiving content for display to a user having a controller device for sending control commands to the reception device via a bidirectional communication channel, the reception device configured to receive the control commands from the controller device and to return an acknowledgement of reception of the control command via the bidirectional, preferably wireless or otherwise remote, communication channel, the reception device being further configured to receive a log of commands and acknowledgments from the controller device and to forward the log to an operator for analysis of a quality of interaction between at least one user and the reception device.

According to a still further aspect, provision is made, in a network for distributing media content, for a method for monitoring a quality of interaction between at least one user and a reception device for receiving the content for the user in a system comprising the reception device and a controller device for controlling the presentation of the content on a presentation device corresponding to the reception device, the controller device and the reception device being remotely connected via a bidirectional, preferably wireless or otherwise remote, communication channel for sending at least one control command from the controller device to the reception device and for receiving, by the controller device, at least a corresponding acknowledgment of reception of the command from the reception device, the method comprising:
sending, by the reception device, at least the acknowledgment of reception to the controller device via the bidirectional communication channel for each command received;
logging, by the controller device, the control command and its corresponding acknowledgment receipt; and
returning, by the controller device, at least one log to the reception device, via the bidirectional communication channel, for uploading by the reception device to an operator for analysis of the quality of interaction.

Known QoS measurement techniques allow for services to be automatically adapted according to network capabilities. For example in adaptive streaming, available network bandwidth may be automatically measured in order to adapt to instant network capabilities by choosing the most appropriate representation of a content to send at any given time. In such cases, QoS measurement usually involves monitoring traffic load information, communication status information, channel status information, channel quality information, quality of service class indicator, signal-to-noise ratio, signal-to interference ratio, bit error rate or packet error rate or any other such parameter which may be measured automatically without requiring a user intervention. Quality of service **QoS** as applicable to embodiments described herein however, refers rather to perceived quality of service or quality of service as it is perceived by a user. A goal is to solicit a true feedback on how a user or users experience reception of content, which may be an indication of how the receiver is operating. Thus, a measure of the QoS of the receiver may be derived.

Figure 1 illustrates an exemplary system in which an embodiment may be deployed. According to an embodiment, an operator may be provided feedback on how a user or users perceive quality of service during the time that the service is being consumed by the user or users. The feedback is based on how at least one user interacts with the reception device using a corresponding remote control unit. Thus, if the user's interactions indicate that some kind of interruption of service has occurred, then the operator responsible for distributing the content or anyone else who receives the information that an interruption has occurred can be sure that the user has indeed experienced an interruption to the service. Interruptions of service may include the user experiencing black screen or an otherwise loss of picture at a time that a particular part of the content is being received by the viewer's receiver, for example. A user's interaction when an interruption to a service has been, or is being, experienced may involve the user entering a particular command or a sequence of commands on the RCU when he or she experiences the interruption. Depending on the type of interruption, the receiver may or may not properly receive the command issued on the RCU. By recording this type of detail, it is possible to evaluate whether the user's interactions indicate whether a loss or interruption of service has occurred. Thus, according to the embodiment, the RCU is configured to log commands issued by the user and the reception device is configured to return at least an acknowledgment of a received command, which the RCU also includes in the log. The user's feedback is provided by the RCU periodically returning the log to the reception device, which in turn may upload the log to an operator for analysis, thereby providing a measure of perceived QoS.

According to another embodiment, feedback is solicited from a plurality of users. Thus a quality of service measurement may be calculated or estimated based on an amalgamation of the feedback of all of the users viewing or otherwise consuming the same content. This provides a more global view of what happened during distribution of the service, which may be more reliable than just depending on a single user's feedback.

Embodiments based on the concepts described herein therefore use a remote control unit **RCU** for the reception device as a means of allowing the viewer to provide the required feedback for calculating the perceived quality of service.

According to an embodiment, the RCU may be a standard one for controlling the display device or the reception device. The RCU may send control signals, in the normal way, to the controlled device. The controlled device may be a receiver, a media player or any other type of viewing device as long as the remote control unit and the controlled device are separate units, remote from each other. The controlled device may acknowledge receipt of a command, or a control signal, by sending an acknowledgement signal back to the RCU. Embodiments therefore require that the RCU be of a bi-directional type, capable of both sending and receiving commands/acknowledgments. The RCU may keep a log of commands sent and/or acknowledgments received and may be configured to send the log to return the log to the controlled device. The sending of the log to the controlled device may be done periodically. The controlled device may then analyse the log with the goal of providing a QoS figure. Preferably however, the receiver is configured to send the log to a control centre or operator in order to perform the analysis. Known technologies for providing bi-directional wireless capability to RCUs include WiFi, Bluetooth **BT** and Bluetooth Low Energy **BLE.**

According to one embodiment, the RCU logs key-press events for issued commands and the resulting information sent back from the receiver to the RCU. The information sent back may include an acknowledge of reception of the command, an interpretation of the command, a result of the command once executed, information on whether or not the command was executed and one or more time-stamps related to the time of reception of the command and/or the time of execution of the command. Thus, from the log it will be possible to detect whether or not the receiver was able to properly execute a command. For example, the RCU may store or log a command issue time-stamp corresponding to the time a user enters a command using the RCU. The RCU may then store or log a command acknowledge time-stamp corresponding to the time an acknowledgement of the command is received from the receiver and/or an execution time-stamp corresponding to a time that the receiver executed the command, as reported by the receiver. Analysis of the different time-stamps then allows for different quality of interaction indicators to be calculated by the RCU, such as time for a command to be acknowledged or time for a command to be executed for example. These indicators may be logged by the RCU and later returned to the reception device to be uploaded to the server or operator. Alternatively, the various time-stamps could be returned to the receiver in raw form so that the calculations of the various quality of interaction indicators may be performed by the operator.

Using the return path afforded by the bidirectional channel between the RCU and the receiver, the RCU is able to return log related information back to the receiver. According to one embodiment, the receiver may analyse the log related information. According to a preferred embodiment, the receiver sends the log related information to a head-end, operator, or network monitoring centre for the analysis.

Analysis of the log related information allows for an operator to observe the functionality of the product, or receiver, being monitored. This gives an idea of the quality of service perceived by the user. Analysis of log related data from a collective of receivers allows for an operator to get an idea of a global quality of service perceived by the collective of users who interact with the receivers.

Embodiments of the present invention allow for an operator to detect when a receiver does not react to commands issued by a user using an RCU. According to an embodiment, each RCU key-press event is logged in the RCU along with any corresponding acknowledgement messages returned to the RCU by the receiver via the bi-directional communication path. The receiver may also send an acknowledgement once the command has been executed and this acknowledgement may also be included in the log along with its corresponding command. Logged commands and/or acknowledgments may also be time-stamped. At pre-determined intervals, or otherwise regular intervals, the RCU may upload or flush the log file to the receiver via the bi-directional communication path. Analysis of the log file allows for the checking of whether the receiver **STB** has not responded to a command or has responded in an incorrect way to a command. The log file may be uploaded from the receiver to the operator for such analysis to be performed. In the case where the operator receives a number of log files from a number of different receivers, the combined analysis of a plurality of received log files allows for the operator to get a good idea of what is going on with the receivers in the field in terms of Quality of Service.

According to an embodiment, special patterns or user interactions deemed to be unusual or of particular significance may be detected during monitoring. This can be the case when monitoring either a single user's interactions with his or her receiver or a group of user's interactions with their respective receivers. For example, a special pattern may be a number of command combinations or key-strokes which ordinarily would not appear to make logical sense for a receiver which operates as expected. One particular example of this could be a repeated "STOP" command entry, thereby indicating that the receiver has not properly responded to a single "STOP" command. Another particular example may be a number of successive channel change commands which may be interpreted as being illogical. This could be an indication that there is a poor image. Particular significance may be derived if such an illogical command sequence were detected as having occurred for a plurality of users, especially if time-stamps were to show that they correspond to the same part in the middle of a film and/or corresponds to around the same time during broadcast.

According to yet another embodiment, the RCU may have a special key whose function is to signal that a problem has occurred. This way the interpretation of the meaning of the command is more direct: a user pressing this key is clearly indicating a problem with the service. The RCU may have a plurality of such special keys, with each key having a special significance. For example, one key for indicating that the image has frozen, one for black screen, one for jitter and so on. In this case, when a plurality of user's log files are considered and it is seen that a special key is being pressed by many users around the same time, it can be accurately deduced that something has gone wrong in the field. The operator may even anticipate that calls from irate customers are soon to follow.

Embodiments described herein rely on end-users to provide feedback on what they are actually experiencing in respect to the reception of services. A plurality of users providing the feedback allows for the analysis of the feedback to be amalgamated so that the conclusion regarding the perceived quality of service is reliable and can be trusted. The operator knows thus when something really has to be fixed. Preferably this allows for the operator to implement fixes to restore a good quality of service even before users become consciously aware of a problem existing. This avoids phone calls from irate users and therefore leads to improved customer satisfaction.

## Claims

1. A system for monitoring a quality of interaction between at least one user and a reception device (STB) for receiving the content for the user, the system comprising the reception device (STB) and a controller device (RCU) for controlling a presentation of the content on a presentation device corresponding to the reception device (STB), the controller device (RCU) and the reception device (STB) being connected via a bidirectional communication channel for sending at least one control command (KEY-EVENT) from the controller device (RCU) to the reception device (STB) and for receiving, by the controller device (RCU), at least a corresponding acknowledgment of reception of the command (ACK) from the reception device (STB); wherein:
the reception device (STB) is configured to send at least the acknowledgment of reception (ACK) to the controller device (RCU) via the bidirectional communication channel for each command (KEY-EVENT) received; and
the controller device (RCU) is configured to create at least one log (LOG) including the control command (KEY-EVENT) and its corresponding acknowledgment receipt (ACK), and is further configured to return the at least one log (LOG) to the reception device for uploading to an operator for analysis of the quality of interaction.

2. The system according to claim 1, wherein the controller device is a remote control unit and the bidirectional communication channel is a wireless communication channel.

3. The system according to claim 1 or 2, the reception device being further configured to send a time-stamp corresponding to the acknowledgement of reception (ACK) to the controller device (RCU) via the bidirectional communication channel, the controller device (RCU) being further configured to log the time-stamp, the analysis of the quality of interaction further taking into account the time-stamp.

4. The system according to any of the preceding claims, the reception device being further configured to send an acknowledgment of execution of the corresponding command to the controller device (RCU) via the bidirectional communication channel, the controller device (RCU) being further configured to log the acknowledgment of execution, the analysis of the quality of interaction further taking into account the acknowledgment of execution.

5. The system according to any of the preceding claims, the system comprising a plurality of the reception devices, the analysis of the quality of interaction taking account of the logs of the plurality of reception devices.

6. The system according to claim 1 or 2, wherein the controller device comprises a button for issuing a pre-determined alert command to the reception device, the reception device being configured to interpret the pre-determined alert command as a problem and to return a problem acknowledgment to the controller device for inclusion into the log, the presence of the problem in the log allowing for the analysis to unambiguously conclude that the quality of interaction is negative.

7. A remote control device (RCU) for bidirectional remote communication with a reception device, the remote control device (RCU) for sending at least one control command (KEY-EVENT) to the reception device and for receiving at least a corresponding acknowledgment of reception of the command (ACK) from the reception device (STB), the remote control device (RCU) being configured to Z create at least one log (LOG) including the control command (KEY-EVENT) and its corresponding acknowledgment receipt (ACK) and to return the at least one log (LOG) to the reception device for uploading to an operator for analysis of the quality of interaction.

8. A method for monitoring a quality of interaction between at least one user and a reception device for receiving the content for the user in a system comprising the reception device (STB) and a controller device (RCU) for controlling a presentation of the content on a presentation device corresponding to the reception device (STB), the controller device (RCU) and the reception device (STB) being connected via a bidirectional communication channel for sending at least one control command (KEY-EVENT) from the controller device (RCU) to the reception device (STB) and for receiving, by the controller device (RCU), at least a corresponding acknowledgment of reception of the command (ACK) from the reception device (STB), the method comprising:
sending, by the reception device (STB), at least the acknowledgment of reception (ACK) to the controller device (RCU) via the bidirectional communication channel for each command (KEY-EVENT) received; creating at least one log (LOG), by the controller device (RCU), including the control command (KEY-EVENT) and its corresponding acknowledgment receipt (ACK); and
returning, by the controller device (RCU), the at least one log (LOG) to the reception device, via the bidirectional communication channel, for uploading by the reception device to an operator for analysis of the quality of interaction.

## Patentansprüche

1. System zur Überwachung einer Qualität von Wechselwirkung zwischen mindestens einem Benutzer und einer Empfangsvorrichtung (STB) zum Empfangen des Inhalts für den Benutzer wobei das System die Empfangsvorrichtung (STB) und eine Steuerungsvorrichtung (RCU) zum Steuern einer Präsentation des Inhalts in einer Präsentationsvorrichtung entsprechend der Empfangsvorrichtung (STB) umfasst, wobei die Steuerungsvorrichtung (RCU) und die Empfangsvorrichtung (STB) über einen bidirektionalen Kommunikationskanal zum Senden mindestens eines Steuerungsbefehls (KEY-EVENT) von der Steuerungsvorrichtung (RCU) zur Empfangsvorrichtung (STB) und zum Empfangen, durch die Steuerungsvorrichtung (RCU), mindestens einer entsprechenden Empfangsbestätigung des Befehls (ACK) von der Empfangsvorrichtung (STB) verbunden sind;
wobei:
die Empfangsvorrichtung (STB) konfiguriert ist, um mindestens die Empfangsbestätigung (ACK) über den bidirektionalen Kanal für jeden empfangenen Befehl (KEY-EVENT) zu der Steuerungsvorrichtung (RCU) zu senden; und
die Steuerungsvorrichtung (RCU) konfiguriert ist, um mindestens ein Protokoll (LOG) zu erstellen, welches den Steuerungsbefehl (KEY-EVENT) und dessen entsprechende Empfangsbestätigung (ACK) beinhaltet, und weiter konfiguriert ist, um das mindestens eine Protokoll (LOG) zum Hochladen zu einem Betreiber zur Analyse der Qualität von Wechselwirkung zurückzusenden.

2. System nach Anspruch 1, wobei die Steuerungsvorrichtung eine Fernsteuerungseinheit ist und der bidirektionale Kommunikationskanal ein drahtloser Kommunikationskanal ist.

3. System nach Anspruch 1 oder 2, wobei die Empfangsvorrichtung weiter konfiguriert ist, um einen Zeitstempel entsprechend der Empfangsbestätigung (ACK) über den bidirektionalen Kommunikationskanal an die Steuerungsvorrichtung (RCU) zu senden, wobei die Steuerungsvorrichtung (RCU) weiter konfiguriert ist, um den Zeitstempel zu protokollieren, wobei die Analyse der Qualität von Wechselwirkung weiter den Zeitstempel berücksichtigt.

4. System nach einem der vorstehenden Ansprüche, wobei die Empfangsvorrichtung weiter konfiguriert ist, um eine Ausführungsbestätigung des entsprechenden Befehls über den bidirektionalen Kommunikationskanal an die Steuerungsvorrichtung (RCU) zu senden, wobei die Steuerungsvorrichtung (RCU) weiter konfiguriert ist, um die Ausführungsbestätigung zu protokollieren, wobei die Analyse der Qualität von Wechselwirkung weiter die Ausführungsbestätigung berücksichtigt.

5. System nach einem der vorstehenden Ansprüche, wobei das System eine Vielzahl von Empfangsvorrichtungen umfasst, wobei die Analyse der Qualität von Wechselwirkung die Protokolle der Vielzahl von Empfangsvorrichtungen berücksichtigt.

6. System nach Anspruch 1 oder 2, wobei die Steuerungsvorrichtung eine Taste zum Ausgeben eines vorbestimmten Warnbefehls an die Empfangsvorrichtung umfasst, wobei die Empfangsvorrichtung konfiguriert ist, um den vorbestimmten Warnbefehl als Problem zu interpretieren, und eine Problembestätigung an die Steuervorrichtung zum Einschließen in das Protokoll zurücksendet, wobei das Vorhandensein das Problems in dem Protokoll die Analyse ermöglicht, um eindeutig zu folgern, dass die Qualität von Wechselwirkung negativ ist.

7. Fernsteuerungsvorrichtung (RCU) zur bidirektionalen Fernkommunikation mit einer Empfangsvorrichtung, wobei die Fernsteuerungsvorrichtung (RCU) zum Senden mindestens eines Steuerungsbefehls (KEY-EVENT) zur Empfangsvorrichtung und zum Empfangen mindestens einer entsprechenden Empfangsbestätigung des Befehls (ACK) von der Empfangsvorrichtung (STB) ist, wobei die Fernsteuerungsvorrichtung (RCU) konfiguriert ist, um mindestens ein Protokoll (LOG) zu erstellen, welches den Steuerungsbefehl (KEY-EVENT) und dessen entsprechende Empfangsbestätigung (ACK) beinhaltet, und das mindestens eine Protokoll (LOG) zur Empfangsvorrichtung zum Hochladen zu einem Betreiber zur Analyse der Qualität von Wechselwirkung zurückzusenden.

8. Verfahren zur Überwachung einer Qualität von Wechselwirkung zwischen mindestens einem Benutzer und einer Empfangsvorrichtung zum Empfangen des Inhalts für den Benutzer in einem System, das die Empfangsvorrichtung (STB) und eine Steuerungsvorrichtung (RCU) zum Steuern einer Präsentation des Inhalts in einer Präsentationsvorrichtung entsprechend der Empfangsvorrichtung (STB) umfasst, wobei die Steuerungsvorrichtung (RCU) und die Empfangsvorrichtung (STB) über einen bidirektionalen Kommunikationskanal zum Senden mindestens eines Steuerungsbefehls (KEY-EVENT) von der Steuerungsvorrichtung (RCU) zur Empfangsvorrichtung (STB) und zum Empfangen, durch die Steuerungsvorrichtung (RCU), mindestens einer entsprechenden Empfangsbestätigung des Befehls (ACK) von der Empfangsvorrichtung (STB) verbunden sind, wobei das Verfahren umfasst:
Senden, durch die Empfangsvorrichtung (STB), mindestens der Empfangsbestätigung (ACK) über den bidirektionalen Kommunikationskanal für jeden empfangenen Befehl (KEY-EVENT) zu der Steuerungsvorrichtung (RCU);
Erstellen mindestens eines Protokolls (LOG), durch die Steuerungsvorrichtung (RCU), welches den Steuerungsbefehl (KEY-EVENT) und dessen entsprechende Empfangsbestätigung (ACK) beinhaltet; und
Zurücksenden, durch die Steuerungsvorrichtung (RCU), des mindestens einen Protokolls (LOG) über den bidirektionalen Kommunikationskanal zur Empfangsvorrichtung, zum Hochladen durch die Empfangsvorrichtung zu einem Betreiber zur Analyse der Qualität von Wechselwirkung.

## Revendications

1. Système pour surveiller une qualité d'interaction entre au moins un utilisateur et un dispositif de réception (STB) pour recevoir le contenu pour l'utilisateur, le système comprenant le dispositif de réception (STB) et un dispositif contrôleur (RCU) pour contrôler une présentation du contenu sur un dispositif de présentation correspondant au dispositif de réception (STB), le dispositif contrôleur (RCU) et le dispositif de réception (STB) étant connectés via un canal de communication bidirectionnel pour envoyer au moins une commande de contrôle (KEY-EVENT) du dispositif contrôleur (RCU) au dispositif de réception (STB) et pour recevoir, par le dispositif contrôleur (RCU), au moins un accusé de réception correspondant de la commande (ACK) en provenance du dispositif de réception (STB) ;
dans lequel :
le dispositif de réception (STB) est configuré pour envoyer au moins l'accusé de réception (ACK) au dispositif contrôleur (RCU) via le canal de communication bidirectionnel pour chaque commande (KEY-EVENT) reçue ; et
le dispositif contrôleur (RCU) est configuré pour créer au moins un journal (LOG) incluant la commande de contrôle (KEY-EVENT) et son accusé de réception (ACK) correspondant, et est en outre configuré pour renvoyer l'au moins un journal (LOG) au dispositif de réception pour le téléversement vers un opérateur pour une analyse de la qualité d'interaction.

2. Système selon la revendication 1, dans lequel le dispositif contrôleur est une unité de contrôle à distance et le canal de communication bidirectionnel est un canal de communication sans fil.

3. Système selon la revendication 1 ou 2, le dispositif de réception étant en outre configuré pour envoyer une estampille temporelle correspondant à l'accusé de réception (ACK) au dispositif contrôleur (RCU) via le canal de communication bidirectionnel, le dispositif contrôleur (RCU) étant en outre configuré pour journaliser l'estampille temporelle, l'analyse de la qualité d'interaction prenant en outre en compte l'estampille temporelle.

4. Système selon l'une quelconque des revendications précédentes, le dispositif de réception étant en outre configuré pour envoyer un accusé d'exécution de la commande correspondante au dispositif contrôleur (RCU) via le canal de communication bidirectionnel, le dispositif contrôleur (RCU) étant en outre configuré pour journaliser l'accusé d'exécution, l'analyse de la qualité d'interaction prenant en outre en compte l'accusé d'exécution.

5. Système selon l'une quelconque des revendications précédentes, le système comprenant une pluralité des dispositifs de réception, l'analyse de la qualité d'interaction tenant compte des journaux de la pluralité de dispositifs de réception.

6. Système selon la revendication 1 ou 2, dans lequel le dispositif contrôleur comprend un bouton pour émettre une commande d'alerte prédéterminée vers le dispositif de réception, le dispositif de réception étant configuré pour interpréter la commande d'alerte prédéterminée comme un problème et pour renvoyer un accusé de problème au dispositif contrôleur pour inclusion dans le journal, la présence du problème dans le journal permettant que l'analyse conclue sans ambiguïté que la qualité d'interaction est négative.

7. Dispositif de contrôle à distance (RCU) pour une communication à distance bidirectionnelle avec un dispositif de réception, le dispositif de contrôle à distance (RCU) étant destiné à envoyer au moins une commande de contrôle (KEY-EVENT) au dispositif de réception et à recevoir au moins un accusé de réception correspondant de la commande (ACK) en provenance du dispositif de réception (STB), le dispositif de contrôle à distance (RCU) étant configuré pour créer au moins un journal (LOG) incluant la commande de contrôle (KEY-EVENT) et son accusé de réception (ACK) correspondant et pour renvoyer l'au moins un journal (LOG) au dispositif de réception pour le téléversement vers un opérateur pour une analyse de la qualité d'interaction.

8. Procédé pour surveiller une qualité d'interaction entre au moins un utilisateur et un dispositif de réception pour recevoir le contenu pour l'utilisateur dans un système comprenant le dispositif de réception (STB) et un dispositif contrôleur (RCU) pour contrôler une présentation du contenu sur un dispositif de présentation correspondant au dispositif de réception (STB), le dispositif contrôleur (RCU) et le dispositif de réception (STB) étant connectés via un canal de communication bidirectionnel pour envoyer au moins une commande de contrôle (KEY-EVENT) du dispositif contrôleur (RCU) au dispositif de réception (STB) et pour recevoir, par le dispositif contrôleur (RCU), au moins un accusé de réception correspondant de la commande (ACK) en provenance du dispositif de réception (STB), le procédé comprenant :
l'envoi, par le dispositif de réception (STB), d'au moins l'accusé de réception (ACK) au dispositif contrôleur (RCU) via le canal de communication bidirectionnel pour chaque commande (KEY-EVENT) reçue ;
la création d'au moins un journal (LOG), par le dispositif contrôleur (RCU), incluant la commande de contrôle (KEY-EVENT) et de son accusé de réception (ACK) correspondant ; et
le renvoi, par le dispositif contrôleur (RCU), de l'au moins un journal (LOG) au dispositif de réception, via le canal de communication bidirectionnel, pour le téléversement par le dispositif de réception vers un opérateur pour une analyse de la qualité d'interaction.
